# EUROPEAN PATENT APPLICATION

(11) **EP 4 098 624 A1**
(43) Date of publication of application: **07.12.2022**
(21) Application number: 21747217.4
(22) Date of filing: 26.01.2021
(51) Int. Cl.: C01G 53/00, H01M 4/505, H01M 4/525

(54) **POSITIVE ELECTRODE ACTIVE MATERIAL FOR NON-AQUEOUS ELECTROLYTE SECONDARY BATTERY, AND METHOD FOR PRODUCING SAME**

(30) Priority: 27.01.2020 JP 2020010848
(71) Applicant: Nichia Corporation, Anan-shi, Tokushima 774-8601 (JP)
(72) Inventor: SONOO, Masato, Anan-shi, Tokushima 774-8601 (JP); HAMADA, Hideaki, Anan-shi, Tokushima 774-8601 (JP); KOBAYASHI, Kenichi, Anan-shi, Tokushima 774-8601 (JP); MORIMOTO, Jota, Anan-shi, Tokushima 774-8601 (JP)
(74) Representative: Vossius & Partner Patentanwälte Rechtsanwälte mbB
(86) International application number: PCT/JP2021/002595
(87) International publication number: WO 2021/153546

(57) **Abstract**

Provided is a positive electrode active material for a non-aqueous electrolyte secondary battery. Also provided is a method for producing a positive electrode active material for a non-aqueous electrolyte secondary battery, comprising: providing a lithium transition metal composite oxide having a ratio D₅₀/D_{SEM} of 1 or more and 4 or less, having a layered structure, and having a ratio of a number of moles of nickel to a total number of moles of metals other than lithium of 0.3 or more and less than 1, and a ratio of a number of moles of cobalt to the total number of moles of metals other than lithium of 0 or more and less than 0.5; bringing the lithium transition metal composite oxide into contact with a cobalt compound to obtain an adhered material; and heat-treating the adhered material at a temperature higher than 700 °C and lower than 1100 °C.

## Description

### TECHNICAL FIELD

The present disclosure relates to a positive electrode active material for a non-aqueous electrolyte secondary battery and a method for producing the same.

### BACKGROUND ART

High output characteristics are required for electrode active materials for nonaqueous electrolyte secondary batteries used in large power equipment such as electric vehicles. To obtain high output characteristics, a positive electrode active material having a structure of secondary particles formed of many aggregated primary particles is considered to be effective. However, in such a positive electrode active material, the secondary particles may be cracked due to pressure treatment at the time of forming an electrode, expansion/contraction at the time of charging/discharging, etc. In this regard, a method has been proposed for producing a positive electrode active material containing lithium transition metal composite oxide particles which are single particles or in which the number of primary particles constituting one secondary particle is reduced (see, e.g., Japanese Laid-Open Patent Publication No. 2017-188443).

On the other hand, a technique has been proposed for coating a lithium transition metal composite oxide containing nickel used as a core material with a lithium transition metal composite oxide containing cobalt. Such a technique is considered to improve stability while maintaining capacity characteristics (see, e.g., Japanese Laid-Open Patent Publication No. 2006-199229).

### SUMMARY OF THE INVENTION

### PROBLEM TO BE SOLVED BY THE INVENTION

One aspect of the present invention has an object to provide a positive electrode active material for a non-aqueous electrolyte secondary battery capable of constituting a non-aqueous electrolyte secondary battery having excellent output characteristics, and a method for producing the same.

### MEANS FOR SOLVING PROBLEM

A first aspect of the present invention provides a method for producing a positive electrode active material for a non-aqueous electrolyte secondary battery. This production method comprises: providing a lithium transition metal composite oxide having a ratio D₅₀/D_{SEM} of 1 or more and 4 or less, wherein D₅₀ is a 50 % particle diameter in a volume-based cumulative particle size distribution and D_{SEM} is an average particle diameter based on electron microscope observation, having a layered structure, and having a ratio of a number of moles of nickel to a total number of moles of metals other than lithium of 0.3 or more and less than 1, and a ratio of a number of moles of cobalt to the total number of moles of metals other than lithium of 0 or more and less than 0.5; bringing the lithium transition metal composite oxide into contact with a cobalt compound to obtain an adhered material; and performing a heat-treatment of the adhered material at a temperature higher than 700 °C and lower than 1100 °C to obtain a heat-treated product.

A second aspect of the present invention provides a positive electrode active material for a non-aqueous electrolyte secondary battery. This positive electrode active material comprises a lithium transition metal composite oxide having a ratio D₅₀/D_{SEM} of 1 or more and 4 or less, wherein D₅₀ is a 50 % particle diameter in a volume-based cumulative particle size distribution and D_{SEM} is an average particle diameter D_{SEM} based on electron microscope observation, having a layered structure, and having a composition in which a ratio of a number of moles of nickel to a total number of moles of metals other than lithium is 0.3 or more and less than 1, and a ratio of a number of moles of cobalt to the total number of moles of metals other than lithium is 0.01 or more and less than 0.5. In the lithium transition metal composite oxide constituting the positive electrode active material, a ratio of the number of moles of nickel to the total number of moles of metals other than lithium is 0.2 or more in a first region at a depth of 500 nm from a surface of the lithium transition metal composite oxide and is 0.06 or more in a second region at a depth of 10 nm or less from the particle surface, and the ratio of the number of moles of cobalt to the total number of moles of metals other than lithium is larger in the second region than in the first region.

### EFFECT OF THE INVENTION

An aspect of the present invention may provide the positive electrode active material for a non-aqueous electrolyte secondary battery capable of constituting a non-aqueous electrolyte secondary battery having excellent output characteristics, and the method for producing the same.

### BRIEF DESCRIPTION OF DRAWINGS

Fig. 1 is an exemplary scanning electron microscope (SEM) image of a positive electrode active material according to Example 1.
Fig. 2 is an exemplary SEM image of a positive electrode active material according to Comparative Example 5.

### MODES FOR CARRYING OUT THE INVENTION

The term "step" as used herein comprises not only an independent step but also a step not clearly distinguishable from another step as long as the intended purpose of the step is achieved. If multiple substances correspond to a component in a composition, the content of the component in the composition means the total amount of the multiple substances present in the composition unless otherwise specified. Embodiments of the present invention will now be described in detail. It should be noted that the embodiments described below are exemplifications of a positive electrode active material for a nonaqueous electrolyte secondary battery and a method for producing the same for embodying the technical ideas of the present invention, and the present invention is not limited to the positive electrode active material for a nonaqueous electrolyte secondary battery and the method for producing the same described below.

### Method for Producing Positive Electrode Active Material for Non-Aqueous Electrolyte Secondary Battery

A method for producing a positive electrode active material for a non-aqueous electrolyte secondary battery (hereinafter, also simply referred to as a positive electrode active material) includes a providing step of providing a lithium transition metal composite oxide having a ratio D₅₀/D_{SEM} of a 50 % particle diameter D₅₀ in a volume-based cumulative particle size distribution to an average particle diameter D_{SEM} based on electron microscope observation of 1 or more and 4 or less, having a layered structure, and having a ratio of the number of moles of nickel to the total number of moles of metals other than lithium of 0.3 or more and less than 1, and a ratio of the number of moles of cobalt of 0 or more and less than 0.5, an adhesion step of bringing the provided lithium transition metal composite oxide into contact with a cobalt compound to obtain an adhered material having a cobalt compound adhering thereto, and a heat treatment step of heat-treating the obtained adhered material at a temperature higher than 700 °C and lower than 1100 °C to obtain a heat-treated product.

By causing the cobalt compound to adhere to the lithium transition metal composite oxide particles which are single particles, or in which the number of primary particles constituting one secondary particle is reduced (hereinafter collectively referred to simply as "single particles") having D₅₀/D_{SEM} of 1 or more and 4 or less, and performing a heat treatment at a specific temperature, a positive electrode active material that can achieve high output characteristics in a non-aqueous electrolyte secondary battery is produced. This can be thought to be due to, for example, presence of a high concentration of cobalt in the vicinity of the surface of the lithium transition metal composite oxide particle derived from the cobalt compound adhering to the surface.

### Providing Step

In the providing step, a lithium transition metal composite oxide having D₅₀/D_{SEM} of 1 or more and 4 or less and a layered structure is provided, and the lithium transition metal composite oxide has a composition in which a ratio of the number of moles of nickel to the total number of moles of metals other than lithium is 0.3 or more and less than 1, and a ratio of the number of moles of cobalt is 0 or more and less than 0.5. The lithium transition metal composite oxide contains at least lithium, nickel, and cobalt, and may further contain at least one metal element selected from the group consisting of manganese, aluminum, etc. The lithium transition metal composite oxide may appropriately be selected from commercially available products, or may be provided by producing a lithium transition metal composite oxide having a desired composition and structure.

The ratio of the number of moles of nickel to the total number of moles of metals other than lithium in the lithium transition metal composite oxide provided in the providing step is, for example, 0.3 or more and less than 1. The lower limit of the ratio of the number of moles of nickel to the total number of moles of metals other than lithium is preferably 0.31 or more, and more preferably 0.32 or more. The upper limit of the ratio of the number of moles of nickel to the total number of moles of metals other than lithium is preferably 0.98 or less, more preferably 0.8 or less, and particularly preferably 0.6 or less. When the molar ratio of nickel is within the range described above, both charge/discharge capacity at high voltage and cycle characteristics may be achieved in the non-aqueous electrolyte secondary battery.

The ratio of the number of moles of cobalt to the total number of moles of metals other than lithium in the lithium transition metal composite oxide provided in the providing step is, for example, 0 or more and less than 0.5 and is preferably 0.15 or more and 0.45 or less, and more preferably 0.3 or more and 0.4 or less from the viewpoint of charge/discharge capacity.

The lithium transition metal composite oxide provided in the providing step may further contain at least one metal element M¹ selected from the group consisting of manganese and aluminum. When the lithium transition metal composite oxide contains the metal element M¹, a ratio of the number of moles of M¹ to the total number of moles of metals other than lithium is, for example, 0 or more and less than 0.5, and is preferably 0.15 or more and 0.45 or less, and more preferably 0.3 or more and 0.4 or less from the viewpoint of safety.

The lithium transition metal composite oxide provided in the providing step may further contain at least one metal element M² selected from the group consisting of boron, sodium, magnesium, silicon, phosphorus, sulfur, potassium, calcium, titanium, vanadium, chromium, zinc, strontium, yttrium, zirconium, niobium, molybdenum, indium, tin, barium, lanthanum, cerium, neodymium, samarium, europium, gadolinium, tantalum, tungsten, bismuth, etc. When the lithium transition metal composite oxide contains the metal element M², a ratio of the number of moles of M² to the total number of moles of metals other than lithium is, for example, 0 or more and 0.1 or less, preferably 0.001 or more and 0.05 or less.

The ratio of the number of moles of lithium to the total number of moles of metals other than lithium in the lithium transition metal composite oxide provided in the providing step is, for example, 0.95 or more and 1.5 or less, preferably 1 or more and 1.3 or less.

When the lithium transition metal composite oxide provided in the providing step contains manganese in addition to nickel and cobalt, the molar ratio of nickel, cobalt, and manganese is, for example, nickel: cobalt: manganese = (0.3 to 0.95):(0 to 0.5):(0 to 0.5), preferably (0.3 to 0.6):( 0.15 to 0.45):( 0.15 to 0.45), more preferably (0.3 to 0.4):(0.3 to 0.4):( 0.3 to 0.4).

The composition of the lithium transition metal composite oxide provided in the providing step may be, for example, a composition represented by Formula (1). The term "composition of the lithium transition metal composite oxide" as used herein refers to the composition of the lithium transition metal composite oxide as a whole.

LiₚNiₓCo_{y}M¹_{z}M²_{w}O₂ (1)

where 0.95≤p≤1.5, 0.3≤x<1, 0≤y<0.5, 0≤z<0.5, 0≤w≤0.1, and x+y+z+w≤1, M¹ is at least one selected from the group consisting of Al and Mn, and M² is at least one selected from the group consisting of B, Na, Mg, Si, P, S, K, Ca, Ti, V, Cr, Zn, Sr, Y, Zr, Nb, Mo, In, Sn, Ba, La, Ce, Nd, Sm, Eu, Gd, Ta, W, and Bi. Additionally, 0.9≤x+y+z+w may be satisfied.

The lithium transition metal composite oxide provided in the providing step may be in a form of so-called single particles composed of 4 or less primary particles, for example. The lithium transition metal composite oxide may have the ratio D₅₀/D_{SEM} of the 50 % particle diameter D₅₀ in a volume-based cumulative particle size distribution to the average particle diameter D_{SEM} based on electron microscope (SEM) observation of 1 or more and 4 or less.

In the lithium transition metal composite oxide provided in the providing step, D₅₀/D_{SEM} of 1 indicates a single particle, and D₅₀/D_{SEM} closer to 1 indicates a smaller number of constituent primary particles. D₅₀/D_{SEM} is preferably 1 or more and 4 or less from the viewpoint of durability, preferably 3.5 or less, more preferably 3 or less, further preferably 2.5 or less, and particularly preferably 2 or less from the viewpoint of output density.

In the lithium transition metal composite oxide provided in the providing step, the average particle diameter D_{SEM} based on electron microscope observation is, for example, 0.1 µm or greater and 20 µm or less from the viewpoint of durability, and is preferably 0.3 µm or greater, more preferably 0.5 µm or greater, and preferably 15 µm or less, more preferably 10 µm or less, further preferably 8 µm or less, and particularly preferably 5 µm or less from the viewpoint of output density and electrode plate filling property.

The average particle diameter D_{SEM} based on electron microscope observation is an average value of the spherical equivalent diameters of the primary particles measured from a scanning electron microscope (SEM) image. Specifically, the average particle diameter D_{SEM} is obtained as follows. By using a scanning electron microscope, observation is performed at a magnification ranging from 1000 times to 10000 times depending on a particle diameter. One hundred primary particles having confirmable particle contours are selected. The contours of the selected primary particles are traced by using image processing software, so that contour lengths of the selected primary particles are obtained. The sphere-equivalent diameters are calculated from the contour lengths, and the average particle diameter D_{SEM} is obtained as an arithmetic mean value of the obtained sphere-equivalent diameters.

The 50 % particle diameter D₅₀ of the lithium transition metal composite oxide provided in the providing step is, for example, 1 µm or greater and 30 µm or less, preferably 1.5 µm or greater, more preferably 3 µm or greater, and is preferably 10 µm or less and more preferably 5.5 µm or less from the viewpoint of output density.

The 50 % particle diameter D₅₀ is obtained as a particle diameter corresponding to 50 % accumulation from the small diameter side in the volume-based cumulative particle size distribution measured under wet conditions by using a laser diffraction particle size distribution measuring device. Similarly, a 90 % particle diameter D₉₀ and a 10 % particle diameter D₁₀ described later are obtained as particle diameters corresponding to 90 % accumulation and 10 % accumulation from the small diameter side, respectively.

A ratio of the 90 % particle diameter D₉₀ to the 10 % particle diameter D₁₀ in the volume-based cumulative particle diameter distribution of the lithium transition metal composite oxide provided in the providing step indicates a spread of the particle size distribution, and when the value is smaller, the particle diameter is more uniform. D₉₀/D₁₀ may be, for example, 4 or less, and is preferably 3 or less, more preferably 2.5 or less, from the viewpoint of output density. The lower limit of D₉₀/D₁₀ may be 1.2 or more, for example.

For the lithium transition metal composite oxide having D₅₀/D_{SEM} of 1 or more and 4 or less provided in the providing step, reference may be made to Japanese Laid-Open Patent Publication No. 2017-188443 (US Patent Application Publication No. 2017-0288221), Japanese Laid-Open Patent Publication No. 2017-188444 (US Patent Application Publication No.2017-0288222), Japanese Laid-Open Patent Publication No. 2017-188445 (US Patent Application Publication No.2017-0288223), etc.

The lithium transition metal composite oxide provided in the providing step has a composition containing nickel. From the viewpoint of the initial efficiency of the non-aqueous electrolyte secondary battery, the lithium transition metal composite oxide preferably has a nickel element disorder of 4.0 % or less, more preferably 2.0 % or less, further preferably 1.5 % or less, which is obtained by an X-ray diffraction method. The nickel element disorder means a chemical disorder of transition metal ions (nickel ions) that should occupy original sites. In the lithium transition metal transition metal composite oxide having a layered structure, the disorder is typically a replacement between an alkali metal ion that should occupy a site represented by 3b (3b site, the same applies hereinafter) and a transition metal ion that should occupy a 3a site when denoted by the Wyckoff symbols. A smaller nickel element disorder is preferable since the initial efficiency is more improved.

The nickel element disorder in the lithium transition metal composite oxide may be obtained by an X-ray diffraction method. The X-ray diffraction spectrum of the lithium transition metal composite oxide is measured with a CuKa ray. A composition model is set to (Li_{1-d}Ni_{d})(NiₓCo_{y}Mn_{z})O₂(x+y+z=1), and the structure is optimized by Rietveld analysis based on the obtained X-ray diffraction spectrum. The percentage of d calculated as a result of the structural optimization is obtained as the value of the nickel element disorder.

Specifically, the lithium transition metal composite oxide provided in the providing step may be prepared as follows. A method for preparing the lithium transition metal composite oxide may comprise, for example, a precursor providing step of providing a precursor and a synthesis step of synthesizing a lithium transition metal composite oxide from the precursor and a lithium compound.

In the precursor providing step, a precursor containing a composite oxide containing nickel and cobalt (hereinafter, also simply referred to as a composite oxide) is provided. The precursor may be provided by appropriately selecting from commercially available products, or by preparing a composite oxide having a desired constitution in a conventional method. Examples of a technique for obtaining a composite oxide having a desired composition include a technique in which raw material compounds (hydroxide, a carbonic acid compound, etc.) is mixed according to an intended composition and the compounds are decomposed into a composite oxide through heat treatment, and a coprecipitation technique in which solvent-soluble raw material compounds are dissolved in a solvent, temperature adjustment, pH adjustment, addition of a complexing agent, etc., are performed to obtain precipitates having an intended composition, and the precipitates are heat-treated to obtain a composite oxide. An example of a method for producing a composite oxide will hereinafter be described.

A method for obtaining a composite oxide using a coprecipitation technique may include a seed generation step of obtaining seed crystals by adjusting a pH etc. of a mixed solution containing metal ions in a desired constituent ratio, a crystallization step of growing the generated seed crystals to obtain a composite hydroxide having desired characteristics, and a step of obtaining a composite oxide through heat treatment of the obtained composite hydroxide. For details of the method for obtaining a composite oxide, reference may be made to Japanese Laid-Open Patent Publication Nos. 2003-292322 and 2011-116580 (US Patent Application Publication No.2012-270107) etc.

In the seed generation step, a liquid medium containing seed crystals is prepared by adjusting a pH of a mixed solution containing nickel ions and cobalt ions in a desired constituent ratio to 11 to 13, for example. The seed crystals may contain a hydroxide containing nickel and cobalt in desired proportions, for example. The mixed solution may be prepared by dissolving nickel salt and cobalt salt in water at a desired ratio. Examples of the nickel salt and the cobalt salt can include sulfate, nitrate, and hydrochloride. In addition to the nickel salt and the cobalt salt, the mixed solution may contain other metal salts as necessary in a desired constituent ratio. The temperature in the seed generation step may be 40 °C to 80 °C, for example. The atmosphere in the seed generation step may be a low oxidation atmosphere, and the oxygen concentration is preferably maintained at 10 vol% or less, for example.

In the crystallization step, the generated seed crystals are grown to obtain a precipitate containing nickel and cobalt having desired characteristics. For example, the seed crystals may be grown by adding a mixed solution containing nickel and cobalt ions and other metal ions as necessary to a liquid medium containing the seed crystals while maintaining the pH at, for example, 7 to 12.5, preferably 7.5 to 12. The addition time of the mixed solution is, for example, 1 hour to 24 hours, preferably 3 hours to 18 hours. The temperature at the crystallization step may be 40 °C to 80 °C, for example. The atmosphere at the crystallization step is the same as the seed generation step. The pH may be adjusted in the seed generation step and the crystallization step by using an acidic aqueous solution such as a sulfuric acid aqueous solution and a nitric acid aqueous solution, an alkaline aqueous solution such as a sodium hydroxide aqueous solution and ammonia water, etc.

In the step of obtaining a composite oxide, the precipitate containing composite hydroxide obtained in the crystallization step is heat-treated to obtain a composite oxide. The heat treatment may be performed, for example, by heating the composite hydroxide at a temperature of 500 °C or lower, preferably at 350 °C or lower. The temperature of the heat treatment is, for example, 100 °C or higher, preferably 200 °C or higher.
The duration of the heat treatment can be, for example, 0.5 hours to 48 hours, preferably 5 hours to 24 hours. The atmosphere of the heat treatment may be the air or an atmosphere containing oxygen. The heat treatment may be performed by using a box furnace, a rotary kiln furnace, a pusher furnace, or a roller hearth kiln furnace, for example.

The obtained composite oxide may contain the other metal element M¹ in addition to nickel and cobalt. The other metal element M¹ may be Mn, Al, etc. and is preferably at least one selected from the group consisting of these elements, and it is more preferable that at least Mn is contained. When the composite oxide contains the other metal, the mixed aqueous solution for obtaining the precipitate may contain the other metal ions in a desired configuration. Accordingly, nickel, cobalt, and the other metal are contained in the precipitate, and the precipitate is heat-treated to obtain the composite oxide having a desired composition.

The average particle diameter of the composite oxide is, for example, 2 µm or greater and 30 µm or less, preferably 3 µm or greater and 25 µm or less. The average particle diameter of the composite oxide is a volume average particle diameter, and is a value at which a volume integrated value from the small particle diameter side is 50 % in a volume-based particle diameter distribution obtained by a laser scattering method.

In the synthesis step, a mixture containing lithium obtained by mixing a composite oxide and a lithium compound is heat-treated to obtain a heat-treated product. The obtained heat-treated product has a layered structure and contains the lithium transition metal composite oxide containing nickel and cobalt.

Examples of the lithium compound mixed with the composite oxide include lithium hydroxide, lithium carbonate, lithium oxide, etc. The particle diameter of the lithium compound used for mixing is, for example, 0.1 µm or greater and 100 µm or less, preferably 2 µm or greater and 20 µm or less, as a 50 % average particle diameter of the volume-based cumulative particle size distribution.

The ratio of the total number of moles of lithium to the total number of moles of metal elements constituting the composite oxide in the mixture is, for example, 0.95 or more and 1.5 or less. The composite oxide and the lithium compound may be mixed by using a high-speed shear mixer, for example.

The mixture may further contain the other metal element M² other than lithium, nickel, and cobalt. The other metal element M² may be B, Na, Mg, Si, P, S, K, Ca, Ti, V, Cr, Zn, Sr, Y, Zr, Nb, Mo, In, Sn, Ba, La, Ce, Nd, Sm, Eu, Gd, Ta, W, Bi, etc., and is preferably at least one selected from the group consisting of these elements. When the mixture contains the other metal, the mixture may be obtained by mixing a simple substance or metal compound of the other metal with the composite oxide and the lithium compound. Examples of the metal compound containing the other metal include oxides, hydroxides, chlorides, nitrides, carbonates, sulfates, nitrates, acetates, oxalates, etc.

When the mixture contains the other metal, the ratio of the total number of moles of the metal elements constituting the composite oxide to the total number of moles of the other metal is, for example, 1:0.015 to 1:0.1, preferably 1:0.025 to 1:0.05.

The heat treatment temperature of the mixture is, for example, 550 °C or higher and 1100 °C or lower, preferably 600 °C or higher and 1080 °C or lower, and more preferably 700 °C or higher and 1080 °C or lower. The heat treatment of the mixture may be performed at a single temperature or is preferably performed at multiple temperatures from the viewpoint of discharge capacity at high voltage. In the case of the heat treatment at multiple temperatures, for example, it is desirable that after maintaining a first temperature for a predetermined time, the temperature is further raised and maintained at a second temperature for a predetermined time. The first temperature is, for example, 850 °C or higher and 950 °C or lower, preferably 900 °C or higher and 940 °C or lower. The second temperature is, for example, 980 °C or higher and 1100 °C or lower, preferably 1000 °C or higher and 1080 °C or lower. The difference between the first temperature and the second temperature is, for example, 30 °C or more, preferably 100 °C or more, and for example, 250 °C or less, preferably 180 °C or less.

The heat treatment time in the case of heat treatment at a single temperature is, for example, 1 hour or more and 20 hours or less, preferably 5 hours or more and 10 hours or less. When the heat treatment is performed at multiple temperatures, the heat treatment time at the first temperature is, for example, 1 hour or more and 20 hours or less, preferably 5 hours or more and 10 hours or less. The heat treatment time at the second temperature is, for example, 1 hour or more and 20 hours or less, preferably 2 hours or more and 10 hours or less. The heat treatment time at the first temperature and the heat treatment time at the second temperature may be the same or different. When the heat treatment time at the first temperature and the heat treatment time at the second temperature are different, for example, the heat treatment time at the first temperature may be made longer than the heat treatment time at the second temperature. Specifically, for example, the heat treatment time at the second temperature can be 1.05 to 2 times, preferably 1.1 to 1.5 times the heat treatment time at the first temperature. In this case, the first heat treatment and the second heat treatment may be performed continuously or independently of each other. When the first heat treatment and the second heat treatment are continuously performed, the rate of temperature rise from the first temperature to the second temperature may be 5 °C/min, for example.

The atmosphere of the heat treatment may be the air or an atmosphere containing oxygen. The heat treatment can be performed by using a box furnace, a rotary kiln furnace, a pusher furnace, or a roller hearth kiln furnace, for example.

The heat-treated product is subjected to a dispersion treatment as necessary. By dissociating the sintered primary particles by the dispersion treatment instead of pulverization treatment associated with strong shearing force and impact, lithium transition metal composite oxide particles having a narrow particle size distribution and uniform particle size may be obtained. The dispersion treatment may be performed in a dry process or a wet process and is preferably performed in a dry process. The dispersion treatment may be performed by using a ball mill or a jet mill, for example. The conditions for the dispersion treatment may be set so that, for example, D₅₀/D_{SEM} of the lithium transition metal composite oxide particles after the dispersion treatment is in a desired range, for example, 1 or more and 4 or less.

For example, when the dispersion treatment is performed by a ball mill, a resin medium may be used. Examples of the material of the resin media include urethane resin and nylon resin. Generally, alumina, zirconia, etc. are used as the material of the media of the ball mill, and the particles are pulverized by these media. On the other hand, by using the resin media, the sintered primary particles are dissociated without being pulverized. The size of the resin media can be ø5 mm to 30 mm, for example. For a body (shell), for example, urethane resin, nylon resin, etc. may be used. The duration of the dispersion treatment is, for example, 3 to 60 minutes, preferably 10 to 30 minutes. For conditions of the dispersion treatment using the ball mill, an amount of the media, a rotation or amplitude speed, a dispersion time, media specific gravity, etc. may be adjusted so that desired D₅₀/D_{SEM} can be achieved.

For example, when the dispersion treatment is performed by a jet mill, a supply pressure, a pulverization pressure, etc. may be adjusted so that desired D₅₀/D_{SEM} can be achieved without pulverizing the primary particles. The supply pressure can be 0.1 to 0.5 MPa, for example, and the pulverization pressure can be 0.1 to 0.6 MPa, for example. By the preparation method described above, a single-particle lithium transition metal composite oxide may efficiently be produced.

### Adhesion Step

In the adhesion step, the provided lithium transition metal composite oxide and the cobalt compound are brought into contact with each other to obtain an adhered material in which the cobalt compound adheres to the surfaces of the lithium transition metal composite oxide particles. The contact between the lithium transition metal composite oxide and the cobalt compound may be achieved in a dry process or a wet process. In the case of the dry process, for example, a high-speed shearing mixer etc. may be used to mix and bring the lithium transition metal composite oxide and the cobalt compound into contact with each other. Examples of the cobalt compound include cobalt hydroxide, cobalt oxide, and cobalt carbonate.

In the case of the wet process, the lithium transition metal composite oxide may be brought into contact with a liquid medium containing the cobalt compound to bring the lithium transition metal composite oxide and the cobalt compound into contact with each other. In this case, the liquid medium may be stirred if necessary. The liquid medium containing the cobalt compound may be a solution of the cobalt compound or a dispersion liquid of the cobalt compound. Alternatively, the lithium transition metal composite oxide may be suspended in a solution of the cobalt compound, and the cobalt compound is precipitated in the solution by pH adjustment, temperature adjustment, etc., to cause the cobalt compound to adhere to the surfaces of the lithium transition metal composite oxide particles.

Examples of the cobalt compound contained in the solution include cobalt sulfate, cobalt nitrate, cobalt chloride, etc. Examples of the cobalt compound contained in the dispersion liquid include cobalt hydroxide, cobalt oxide, and cobalt carbonate. The liquid medium may contain water, for example, and may contain a water-soluble organic solvent such as alcohol in addition to water. The concentration of the cobalt compound in the liquid medium may be, for example, 1 mass% or greater and 8.5 mass% or less.

A total amount of the cobalt compound brought into contact with the lithium transition metal composite oxide is, for example, 1 mol% or greater and 20 mol% or less, preferably 3 mol% or greater and 15 mol % or less, based on cobalt, relative to the lithium transition metal composite oxide.

The contact temperature between the lithium transition metal composite oxide and the cobalt compound may be, for example, 40 °C or higher and 80 °C or lower, preferably 40 °C or higher and 60 °C or lower. The contact temperature may be, for example, 20 °C or higher and 80 °C or lower. The contact time is, for example, 30 minutes or more and 180 minutes or less, preferably 30 minutes or more and 60 minutes or less.

After contact with the liquid medium containing the cobalt compound, if necessary, the lithium transition metal composite oxide with the cobalt compound adhering thereto may be subjected to treatments such as filtration, water washing, and drying. A preliminary heat treatment may be performed depending on a type of the adhering cobalt compound. When the preliminary heat treatment is performed, the temperature is, for example, 100 °C or higher and 350 °C or lower, preferably 120 °C or higher and 320 °C or lower. The treatment time is, for example, 5 hours or more and 20 hours or less, preferably 8 hours or more and 15 hours or less. The atmosphere of the preliminary heat treatment is, for example, an atmosphere containing oxygen and may be the air atmosphere.

### Heat Treatment Step

In the heat treatment step, the cobalt adhered material obtained in the adhesion step is heat-treated at a predetermined temperature higher than 700 °C and less than 1100 °C to obtain a heat-treated product. The obtained heat-treated product is a positive electrode active material containing a lithium transition metal composite oxide having a high cobalt concentration near the surfaces of the particles, and in a nonaqueous electrolyte secondary battery formed by using the material, excellent output characteristics can be achieved.

The adhered material to be subjected to the heat treatment may be a mixture with a lithium compound. Therefore, the production method may include a mixing step of mixing the adhered material and the lithium compound to obtain a mixture before the heat treatment step. By heat-treating the adhered material together with the lithium compound at a predetermined temperature, the output characteristics of the nonaqueous electrolyte secondary battery may further be improved.

Examples of the lithium compound mixed with the adhered material include lithium hydroxide, lithium carbonate, lithium chloride etc. Regarding an additive amount of the lithium compound, the mixing is performed such that a molar ratio of lithium and cobalt (Li:Co) with respect to an amount of cobalt caused to adhere in the adhesion step is 0.95 to 1.50:1, preferably 1.00 to 1.30:1, for example. The mixing may be performed by using a high-speed shear mixer, for example.

The temperature of the heat treatment of the cobalt adhered material is, for example, higher than 700 °C and less than 1100 °C. The lower limit of the heat treatment temperature is preferably 750 °C or higher, more preferably 800 °C or higher, and particularly preferably 860 °C or higher. The upper limit of the heat treatment temperature is preferably 1080 °C or lower, more preferably 1060 °C or lower, further preferably 1020 °C or lower, and particularly preferably 1000 °C or lower. The heat treatment time is, for example, 1 hour or more and 20 hours or less, preferably 3 hours or more and 10 hours or less. The atmosphere of the heat treatment is, for example, an atmosphere containing oxygen, and may be the air atmosphere.

The heat-treated product after the heat treatment may be subjected to treatments such as crushing, pulverization, classification operation, and granulating operation, if necessary.

The heat-treated product obtained as described above contains the lithium transition metal composite oxide particles in the form of single particles, and the concentration of cobalt is high in the vicinity of the surfaces of the particles. Therefore, in the lithium transition metal composite oxide particles, the ratio of the number of moles of nickel to the total number of moles of metals other than lithium is 0.2 or more in a first region where the depth from the particle surface is about 500 nm and is 0.06 or more in a second region where the depth from the particle surface is about 10 nm or less. Additionally, the ratio of the number of moles of cobalt to the total number of moles of metals other than lithium is larger in the second region than in the first region. The depth of the first region from the particle surface can be 450 nm to 550 nm, for example, and the depth of the second region from the particle surface can be 5 nm to 15 nm, for example.

### Positive Electrode Active Material for Non-Aqueous Electrolyte Secondary Battery

The positive electrode active material for a non-aqueous electrolyte secondary battery (hereinafter, also simply referred to as the positive electrode active material) contains a lithium transition metal composite oxide having the ratio D₅₀/D_{SEM} of the 50 % particle diameter D₅₀ in a volume-based cumulative particle size distribution to the average particle diameter D_{SEM} based on electron microscope observation of 1 or more and 4 or less, having a layered structure, and having the ratio of the number of moles of nickel to the total number of moles of metals other than lithium of 0.3 or more and less than 1, and the ratio of the number of moles of cobalt to the total number of moles of metals other than lithium of 0.01 or more and less than 0.5. In the lithium transition metal composite oxide, the ratio of the number of moles of nickel to the total number of moles of metals other than lithium is 0.2 or more in the first region where the depth from the particle surface is 500 nm and is 0.06 or more in the second region where the depth from the particle surface is 10 nm or less. In the lithium transition metal composite oxide, the ratio of the number of moles of cobalt to the total number of moles of metals other than lithium is larger in the second region than in the first region.

In the lithium transition metal composite oxide particles constituting the positive electrode active material, cobalt is unevenly distributed and has an increased concentration near the surfaces of the particles. Therefore, the output characteristics may be improved when a battery is formed by using such a positive electrode active material. The form of cobalt present near the surfaces of the particles is not clear and is probably, for example, a form in which cobalt is solid-dissolved near the surfaces of the particles of the lithium transition metal composite oxide, a form of coating the surfaces of the particles of the lithium transition metal composite oxide made from a base material that is a compound containing cobalt, etc.

The effect of improving the output characteristics due to the uneven distribution of cobalt near the surfaces of the particles is more effectively provided in the case of single particles having D₅₀/D_{SEM} of 4 or less as compared to the case of so-called agglomerated particles composed of a large number of agglomerated primary particles and having D₅₀/D_{SEM} greater than 4. For example, this may be considered as follows. Since a three-dimensional grain boundary network is formed in the agglomerated particles, the output characteristics are probably improved by grain boundary conduction. On the other hand, while it is difficult to fully utilize grain boundary conduction in the single particles, the output characteristics are more improved probably because an improvement in lithium conductivity due to cobalt unevenly distributed near the surface of the particles is more effectively achieved.

D₅₀/D_{SEM} of the lithium transition metal composite oxide particles contained in the positive electrode active material is, for example, 1 or more and 4 or less, and is preferably 3.5 or less, more preferably 3 or less, further preferably 2.5 or less, and particularly preferably 2 or less from the viewpoint of output density. The method for measuring the average particle diameter D_{SEM} and the 50 % particle diameter D₅₀ based on electron microscope observation is as described above.

In the lithium transition metal composite oxide particles, the average particle diameter D_{SEM} based on electron microscope observation is, for example, 0.1 µm or greater and 20 µm or less from the viewpoint of durability. The lower limit of the average particle diameter D_{SEM} based on electron microscope observation is preferably 0.3 µm or greater, more preferably 0.5 µm or greater, from the viewpoint of output density and electrode plate filling property, and the upper limit is preferably 15 µm or less, more preferably 10 µm or less, further preferably 8 µm or less, and particularly preferably 5 µm or less.

The 50 % particle diameter D₅₀ of the lithium transition metal composite oxide particles is, for example, 1 µm or greater and 30 µm or less, preferably 1.5 µm or greater, more preferably 3 µm or greater, and is preferably 10 µm or less, more preferably 5.5 µm or less, from the viewpoint of output density.

D₉₀/D₁₀ of the lithium transition metal composite oxide particles may be, for example, 4 or less, and is preferably 3 or less, more preferably 2.5 or less, from the viewpoint of output density. The lower limit of D₉₀/D₁₀ is, for example, 1.2 or more.

In lithium transition metal composite oxide particles, the ratio of the number of moles of nickel to the total number of moles of metals other than lithium in the first region having the depth from the particle surface about 500 nm (hereinafter, also simply referred to as "nickel ratio") is, for example, 0.2 or more, preferably 0.25 or more. The nickel ratio in the first region is, for example, 1 or less, preferably 0.5 or less. The nickel ratio in the second region having the depth from the particle surface of about 10 nm or less is, for example, 0.06 or more, preferably 0.1 or more. The nickel ratio in the second region is, for example, 0.9 or less, preferably 0.5 or less. A value obtained by dividing the nickel ratio in the second region by the nickel ratio in the first region is, for example, less than 1, preferably 0.9 or less or 0.8 or less. A value obtained by dividing the nickel ratio in the second region by the nickel ratio in the first region is, for example, 0.02 or more, preferably 0.03 or more or 0.07 or more. The depth of the second region from the particle surface is, for example, 10 nm or less, or may be close to 10 nm.

In the lithium transition metal composite oxide particles, the ratio of the number of moles of cobalt to the total number of moles of metals other than lithium (hereinafter, also simply referred to as "cobalt ratio") is larger in the second region than in the first region. The cobalt ratio in the first region is, for example, 0 or more, preferably 0.2 or more. The cobalt ratio in the first region is, for example, 0.5 or less, preferably 0.4 or less. The cobalt ratio in the second region is, for example, 0.3 or more, preferably 0.5 or more. The cobalt ratio in the second region is, for example, 0.9 or less, preferably 0.8 or less. A value obtained by dividing the cobalt ratio of the second region by the sum of the cobalt ratio in the first region and the cobalt ratio in the second region is, for example, greater than 0.5 and less than 1, preferably 0.55 or more and 0.72 or less.

The nickel ratio and the cobalt ratio in the first region and the second region may be calculated by measuring SEM-EDX in a cross section of the lithium transition metal composite oxide particle.

In the lithium transition metal composite oxide particle, the cobalt ratio may decrease continuously or discontinuously from the particle surface to the inside of the particle. A concentration gradient of cobalt is defined as an absolute value of a value obtained by dividing a difference in the ratio of the number of moles of cobalt to the total number of moles of metals other than lithium in the first region and the second region by a difference in depth of the first region and the second region from the surface and is, for example, greater than 0.00004 (nm⁻¹) and less than 0.00122 (nm⁻¹), preferably 0.00005 (nm⁻¹) or more and 0.0011 (nm⁻¹) or less, or 0.00006 (nm⁻¹) or more and 0.00009 (nm⁻¹) or less. Specifically, the concentration gradient of cobalt is obtained by dividing a value obtained by subtracting the cobalt ratio in the first region from the cobalt ratio in the second region by a value obtained by subtracting the depth of the second region from the surface from the depth of the first region from the surface.

The composition of the lithium transition metal composite oxide contained in the positive electrode active material may be considered as composition comprising a cobalt compound adhering to the composition of the lithium transition metal composite oxide before adhesion of the cobalt compound in the production method described above.

The ratio of the number of moles of nickel to the total number of moles of metals other than lithium in the composition of the lithium transition metal composite oxide contained in the positive electrode active material is, for example, 0.3 or more and less than 1. The lower limit of the ratio of the number of moles of nickel to the total number of moles of metals other than lithium is preferably 0.31 or more, and more preferably 0.32 or more. The upper limit of the ratio of the number of moles of nickel to the total number of moles of metals other than lithium is preferably 0.98 or less, more preferably 0.8 or less, particularly preferably 0.6 or less. When the molar ratio of nickel is within the range described above, a charge/discharge capacity at high voltage and cycle characteristics can be satisfied at the same time in the nonaqueous electrolyte secondary battery.

The ratio of the number of moles of cobalt to the total number of moles of metals other than lithium in the composition of the lithium transition metal composite oxide contained in the positive electrode active material is, for example, greater than 0 and less than 0.5 or 0.01 or more and less than 0.5 and is preferably 0.15 or more and 0.45 or less, and more preferably 0.3 or more and 0.4 or less from the viewpoint of charge/discharge capacity.

The composition of the lithium transition metal composite oxide contained in the positive electrode active material may further contain at least one metal element M¹ selected from the group consisting of manganese and aluminum. When the lithium transition metal composite oxide contains the metal element M¹, the ratio of the number of moles of M¹ to the total number of moles of metals other than lithium is, for example, 0 or more and less than 0.5, and is preferably 0.15 or more and 0.45 or less, more preferably 0.3 or more and 0.4 or less, from the viewpoint of safety.

The composition of the lithium transition metal composite oxide contained in the positive electrode active material may further contain at least one second metal element M² selected from the group consisting of boron, sodium, magnesium, silicon, phosphorus, sulfur, potassium, calcium, titanium, vanadium, chromium, zinc, strontium, yttrium, zirconium, niobium, molybdenum, indium, tin, barium, lanthanum, cerium, neodymium, samarium, europium, gadolinium, tantalum, tungsten, bismuth, etc. When the lithium transition metal composite oxide contains the metal element M², the ratio of the number of moles of M² to the total number of moles of metals other than lithium is, for example, 0 or more and 0.1 or less, preferably 0.001 or more and 0.05 or less.

The ratio of the number of moles of lithium to the total number of moles of metals other than lithium in the composition of the lithium transition metal composite oxide contained in the positive electrode active material is, for example, 0.95 or more and 1.5 or less, preferably 1 or more and 1.3 or less.

When the lithium transition metal composite oxide contained in the positive electrode active material contains manganese in addition to nickel and cobalt, the molar ratio of nickel, cobalt, and manganese is, for example, nickel: cobalt: manganese=(0.3 to 0. 95):(0.01 to 0.5):(0 to 0.5), preferably (0.3 to 0.6):(0.15 to 0.45):(0.15 to 0.45), more preferably (0.3 to 0.4):(0.3 to 0.4):(0.3 to 0.4).

When the lithium transition metal composite oxide contained in the positive electrode active material is represented as a composition, for example, a lithium transition metal composite oxide having a composition represented by the following formula is preferable.

Li_{q}NiᵣCoₛM¹ₜM²ᵤO₂

where 0.95≤q≤1.5, 0.3≤r<1, 0.01≤s<0.5, 0≤t<0.5, 0≤u≤0.1, and r+s+t+u≤1, M¹ is at least one selected from the group consisting of Al and Mn, and M² is at least one selected from the group consisting of B, Na, Mg, Si, P, S, K, Ca, Ti, V, Cr, Zn, Sr, Y, Zr, Nb, Mo, In, Sn, Ba, La, Ce, Nd, Sm, Eu, Gd, Ta, W, and Bi. Additionally, 0.9≤r+s+t+u may be satisfied.

The lithium transition metal composite oxide contained in the positive electrode active material preferably has a nickel element disorder of 4.0 % or less, more preferably 2.0 % or less, further preferably 1.5 % or less, which is obtained by an X-ray diffraction method, from the viewpoint of initial efficiency in the non-aqueous electrolyte secondary battery. The nickel element disorder is as described above.

### [Electrode for Non-aqueous Electrolyte Secondary Battery]

An electrode for a non-aqueous electrolyte secondary battery includes a collector and a positive electrode active material layer disposed on the collector and containing the positive electrode active material for a nonaqueous secondary battery produced by the production method. The non-aqueous electrolyte secondary battery including the electrode can achieve high output characteristics.

Examples of the material of the collector include aluminum, nickel, stainless steel, etc. The positive electrode active material layer is formed by applying a positive electrode composition obtained by mixing the positive electrode active material described above, a conductive material, a binder, etc. together with a solvent onto the collector and performing a drying treatment, a pressure treatment, etc. Examples of the conductive material include natural graphite, artificial graphite, acetylene black, etc. Examples of the binder include polyvinylidene fluoride, polytetrafluoroethylene, and polyamide acrylic resin.

### [Non-aqueous Electrolyte Secondary Battery]

The non-aqueous electrolyte secondary battery includes the electrode for a non-aqueous electrolyte secondary battery. The non-aqueous electrolyte secondary battery includes a negative electrode for a nonaqueous electrolyte secondary battery, a nonaqueous electrolyte, a separator, etc., in addition to the electrode for a non-aqueous electrolyte secondary battery. For the negative electrode, the non-aqueous electrolyte, the separator, etc., in the non-aqueous electrolyte secondary battery, for example, those for a non-aqueous secondary battery described in Japanese Laid-Open Patent Publication Nos. 2002-075367, 2011-146390, and 2006-12433 (incorporated herein by reference in their entirety) can appropriately be used.

### Examples

The present invention will hereinafter specifically be described with reference to examples; however, the present invention is not limited to these examples.

### (Example 1)

### Seed Generation Step

In a reaction tank, 30 kg of water was placed, and nitrogen gas was allowed to flow while stirring at a temperature in the tank set to 40 °C. After the oxygen concentration in the space inside the reaction tank was kept at 10 vol% or less, 197 g of a 25 mass% sodium hydroxide aqueous solution was added to adjust the pH value of the solution in the reaction tank to 11 or more. Subsequently, a nickel sulfate solution, a manganese sulfate solution, and a cobalt sulfate solution were mixed to prepare a mixed aqueous solution containing nickel ions, manganese ions, and cobalt ions at a molar ratio of 1:1:1 with the total ion concentration of nickel ions, manganese ions, and cobalt ions set to 1.7 mol/L. While stirring the solution in the reaction tank, 4.76 L of the prepared mixed aqueous solution was added to prepare a liquid medium containing seed crystals.

### Crystallization Step

After the seed generation step, while the temperature is maintained at 40 °C, 452 moles of 25 mass% sodium hydroxide and 201 moles of the mixed aqueous solution were both put into a reaction tank at a constant flow rate for 18 hours or longer. The pH at this time was maintained at 11.0 to 12.0. An obtained hydroxide containing nickel, manganese, and cobalt had a 50 % particle diameter D₅₀ of 10.1 µm. The generated precipitate was then washed with water and filtered to obtain a composite hydroxide. The obtained composite hydroxide was heat-treated at 320 °C for 12 hours in the air atmosphere to obtain a composite oxide having a composition ratio of Ni/Co/Mn=0.33/0.33/0.33.

### Synthesis Step

The obtained composite oxide and lithium carbonate were mixed at Li:(Ni+Co+Mn)=1.15:1 to obtain a raw material mixture. The obtained raw material mixture was heat-treated in the air at 925 °C for 7.5 hours and then heat-treated at 1060 °C for 4 hours to obtain a heat-treated product. The obtained heat-treated product was subjected to a dispersion treatment to obtain a lithium transition metal composite oxide having a 50 % particle diameter D₅₀ of 10.5 µm and a composition represented by a composition formula: Li_{1.14}Ni_{0.33}Co_{0.33}Mn_{0.33}O₂.

### Adhesion Step and Heat Treatment Step

In a reaction tank, 5 kg of the obtained lithium transition metal composite oxide was suspended in 50 kg of water, and the temperature in the tank was set to 40 °C. As a cobalt source, 2.2 kg of cobalt sulfate having a concentration of 8.1 mass% was used, and pH 9.5 was achieved by 25 % sodium hydroxide while blowing carbon dioxide gas at 0.56 L/min to obtain a cobalt-adhered material precursor. An amount of cobalt sulfate used was 6 mol % in terms of cobalt relative to the lithium transition metal composite oxide. The generated cobalt-adhered material precursor was then washed with water and filtered to obtain a composite hydroxide. The obtained composite hydroxide was heat-treated at 300 °C for 12 hours in the air atmosphere to obtain a cobalt-adhered material in which a cobalt compound adheres to the lithium transition metal composite oxide. Subsequently, lithium hydroxide was mixed so that the molar ratio of added cobalt and lithium was Li:Co=1.15:1 to obtain a mixture. The obtained mixture was heat-treated at 1000 °C in the air for 3 hours. The obtained heat-treated product was put through a dry sieve to obtain a positive electrode active material containing the lithium transition metal composite oxide having a composition represented by Li_{1.14}Ni_{0.313}Co_{0.374}Mn_{0.313}O₂ subjected to a Co treatment. Table 1 shows the physical property values of the obtained positive electrode active material.

### (Example 2)

The positive electrode active material of Example 2 was produced as in Example 1 except that the heat treatment temperature of the mixture was changed to 900 °C as shown in Table 1.

### (Example 3)

The positive electrode active material of Example 3 was produced as in Example 1 except that the heat treatment temperature of the mixture was changed to 850 °C as shown in Table 1.

### (Comparative Example 1)

The lithium transition metal composite oxide obtained in the synthesis step of Example 1 was used as the positive electrode active material of Comparative Example 1.

### (Comparative Example 2)

The positive electrode active material of Comparative Example 2 was produced as in Example 1 except that the heat treatment temperature of the mixture was changed to 1100 °C as shown in Table 1.

### (Comparative Example 3)

The positive electrode active material of Comparative Example 3 was produced as in Example 1 except that the heat treatment temperature of the mixture was changed to 700 °C as shown in Table 1.

### (Comparative Example 4)

The composite oxide obtained in the crystallization step of Example 1 and lithium carbonate were mixed at Li:(Ni+Co+Mn)=1.15:1 to obtain a raw material mixture. The obtained raw material mixture was heat-treated in the air at 930 °C for 12 hours to obtain a heat-treated product. The obtained heat-treated product was subjected to a dispersion treatment to obtain a positive electrode active material containing the lithium transition metal composite oxide having a 50 % particle diameter D₅₀ of 9.6 µm and a composition represented by a composition formula: Li_{1.14}Ni_{0.33}Co_{0.33}Mn_{0.33}O₂.

### (Comparative Example 5)

In a reaction tank, 5 kg of the lithium transition metal composite oxide obtained in Comparative Example 4 was suspended in 50 kg of water, and the temperature in the tank was set to 40 °C. As a cobalt source, 2.2 kg of cobalt sulfate having a concentration of 8.1 mass% was used, and pH 9.5 was achieved by 25 % sodium hydroxide while blowing carbon dioxide gas at 0.56 L/min to obtain a cobalt-adhered material precursor. The generated cobalt-adhered material precursor was then washed with water and filtered to obtain a composite hydroxide. The obtained composite hydroxide was heat-treated at 300 °C for 12 hours in the air atmosphere to obtain a cobalt-adhered material. Subsequently, lithium hydroxide was mixed so that the ratio of added cobalt and lithium was Li:Co=1.15:1 to obtain a mixture. The obtained mixture was heat-treated at 900 °C in the air for 3 hours. The obtained heat-treated product was put through a dry sieve to obtain a positive electrode active material containing the lithium transition metal composite oxide having a composition represented by Li_{1.14}Ni_{0.313}Co_{0.374}Mn_{0.313}O₂ subjected to a Co treatment.

### Particle Diameter Evaluation

For the positive electrode active material obtained as described above, the physical property values were measured as follows. D₅₀ was obtained by measuring the volume-based cumulative particle size distribution by using a laser diffraction particle size distribution measuring device (SALD-3100 manufactured by Shimadzu Corporation) as the particle diameter corresponding to 50 % accumulation from the small diameter side. The average particle diameter D_{SEM} based on electron microscope observation was calculated as follows. By using a scanning electron microscope (SEM), 100 primary particles having confirmable particle contours are selected in images observed at 1000 to 10000 times of magnification. The contours of the selected primary particles are traced by using image processing software (ImageJ) to obtain contour lengths of the selected primary particles. The sphere-equivalent diameters were calculated from the contour lengths, and the average particle diameter D_{SEM} was obtained as an arithmetic mean value of the obtained sphere-equivalent diameters.

### Evaluation of Cobalt Distribution and Nickel Distribution

For the positive electrode active material obtained as described above, the cobalt distribution and the nickel distribution inside the particles were evaluated. Specifically, the nickel content and the cobalt content in the first region and the second region were evaluated as follows.

### Composition Analysis

After each of the positive electrode active materials obtained in Examples 1 to 3 and Comparative Examples 1 to 5 was dispersed and solidified in an epoxy resin, a cross section of the secondary particle of the positive electrode active material was exposed by using a cross section polisher (manufactured by JEOL Ltd.) to produce a measurement sample. At one point each in the first region and the second region of the measurement sample, an intensity ratio of each of the metal components other than lithium was obtained by a scanning electron microscope (SEM)/energy dispersive X-ray analysis (EDX) device (manufactured by Hitachi High-Tech Corporation; acceleration voltage: 3 kV). The cobalt ratio was defined as an intensity ratio of cobalt to the sum of the intensity ratios of the metal components other than lithium, and the nickel ratio was defined as an intensity ratio of nickel to sum of the intensity ratios of the metal components other than lithium.

### Scanning Electron Microscope Observation

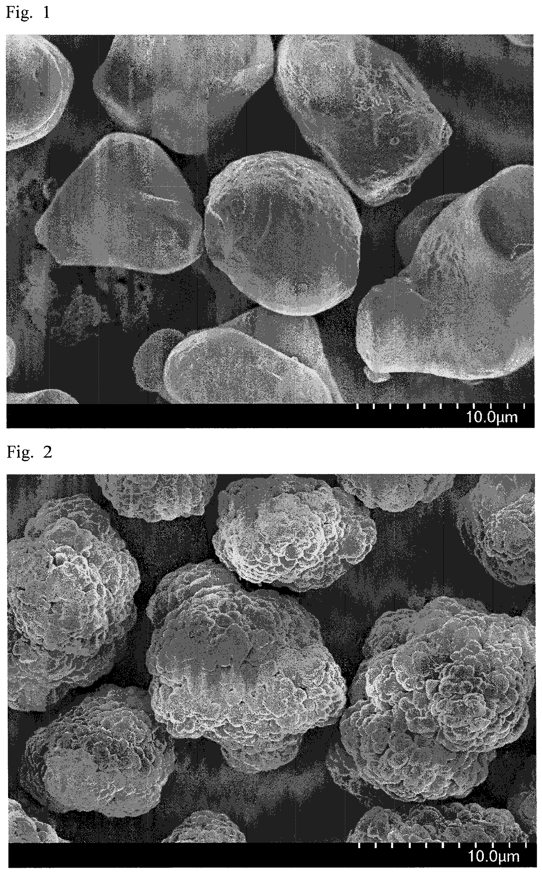

SEM images of the positive electrode active materials obtained in Example 1 and Comparative Example 5 were obtained by using a scanning electron microscope (SEM; acceleration voltage: 1.5 kV). The SEM image of the positive electrode active material of Example 1 is shown in Fig. 1, and the SEM image of the positive electrode active material of Comparative Example 5 is shown in Fig. 2.

### Fabrication of Evaluation Batteries

Evaluation batteries were prepared by using the positive electrode active materials obtained as described above by the following procedure.

### Fabrication of Positive Electrode

A positive electrode composition was prepared by dispersing 90 parts by mass of the positive electrode active material, 5 parts by mass of acetylene black, and 5 parts by mass of polyvinylidene fluoride (PVDF) in N-methyl-2-pyrrolidone (NMP). The obtained positive electrode composition was applied to an aluminum foil serving as a collector, dried, compression-molded by a roll press machine, and then cut into a predetermined size to prepare a positive electrode.

### (Fabrication of Negative Electrode)

A negative electrode slurry was prepared by dispersing and dissolving 97.5 parts by mass of artificial graphite, 1.5 parts by mass of carboxymethyl cellulose (CMC), and 1.0 part by mass of SBR (styrene butadiene rubber) in pure water. The obtained negative electrode slurry was applied to a collector made of copper foil, dried, compression-molded by a roll press machine, and cut into a predetermined size to prepare a negative electrode.

### (Fabrication of Evaluation Battery)

After respective lead electrodes were attached to the collectors of the positive and negative electrodes, a separator is arranged between the positive electrode and the negative electrode, and these were stored in a bag-shaped laminate pack. Vacuum drying was then performed at 65 °C to remove water adsorbed in the members. Subsequently, an electrolytic solution was injected and sealed in the laminate pack under an argon atmosphere to fabricate the evaluation battery. The electrolytic solution used was obtained by mixing ethylene carbonate (EC) and methyl ethyl carbonate (MEC) at a volume ratio of 3:7 and dissolving lithium hexafluorophosphate (LiPF₆) at a concentration of 1 mol/L. After the evaluation battery obtained in this way was placed in a constant temperature bath at 25 °C and aged with a weak current, the following evaluation was performed.

### Measurement of DC Internal Resistance

The evaluation battery after aging was placed under environments of -25 °C to measure DC internal resistance. Constant-current charge to a charge depth of 50 % at a full-charge voltage of 4.75 V was followed by pulse discharge with a specific current i for 10 seconds, and a voltage V at the tenth second was measured. Intersections between the values of the current i on the horizontal axis and the values of the voltage V on the vertical axis were plotted, and an inclination of a straight line connecting the intersections was defined as DC internal resistance (DC-IR). The current i was set to 0.03 A, 0.05 A, 0.08 A, 0.105 A, and 0.13 A. The low DC-IR means that the output characteristics are favorable.

**[Table 1]**

| | Heat treatment temperature (°C) | D₅₀ (µm) | D_{SEM} (µm) | D₅₀ /D_{SEM} | Nickel ratio | | Cobalt ratio | | | DC-IR (Ω) -25°C |
|---|---|---|---|---|---|---|---|---|---|---|
| | | | | | Second region | First region | Second region | First region | Concentration gradient | |
| Example 1 | 1000 | 13.3 | 7.9 | 1.70 | 0.28 | 0.26 | 0.55 | 0.35 | 0.00041 | 17.0 |
| Example 2 | 900 | 12.8 | 7.8 | 1.64 | 0.22 | 0.28 | 0.69 | 0.34 | 0.00071 | 17.0 |
| Example 3 | 850 | 11.8 | 7.6 | 1.55 | 0.15 | 0.28 | 0.74 | 0.35 | 0.00079 | 17.2 |
| Comparative Example 1 | - | 10.5 | 7.5 | 1.40 | 0.28 | 0.27 | 0.34 | 0.33 | 0.00002 | 27.1 |
| Comparative Example 2 | 1100 | 15.0 | 7.6 | 1.99 | 0.27 | 0.25 | 0.38 | 0.36 | 0.00004 | 38.6 |
| Comparative Example 3 | 700 | 11.1 | 8.3 | 1.33 | 0.02 | 0.28 | 0.94 | 0.34 | 0.00122 | 49.7 |
| Comparative Example 4 | - | 9.6 | 0.7 | 14.33 | 0.25 | 0.26 | 0.30 | 0.30 | 0.00000 | 16.6 |
| Comparative Example 5 | 900 | 9.6 | 0.7 | 13.33 | 0.23 | 0.23 | 0.70 | 0.30 | 0.00081 | 13.6 |

When the battery is configured to contain the positive electrode active material having D₅₀/D_{SEM} of 1 or more and 4 or less, the nickel ratio in the first region of 0.2 or more, the nickel ratio in the second region of 0.06 or more, and the cobalt ratio in the second region larger than the cobalt ratio in the first region like the positive electrode active materials of Examples 1 to 3, the output characteristics are improved as compared to Comparative Examples 1 to 3.

**[Table 2]**

| | DC-IR (Ω) | |
|---|---|---|
| | -25°C (Ω) | Improvement rate (%) |
| Example 2 | 17.0 | 37.3 |
| Comparative Example 1 | 27.1 | Standard |

**[Table 3]**

| | DC-IR (Ω) | |
|---|---|---|
| | -25°C (Ω) | Improvement rate (%) |
| Comparative Example 4 | 16.6 | Standard |
| Comparative Example 5 | 13.6 | 18.1 |

Tables 2 to 3 show an improvement rate of the output characteristics of the lithium transition metal composite oxide obtained by the production method comprising the cobalt adhesion step and the treatment step when the lithium transition metal composite oxide obtained by the production method without the cobalt adhesion step and the heat treatment step is used as a reference. It was confirmed that the effect in the production method comprising the cobalt adhesion step and the heat treatment step in the example in Table 2 was larger as compared to the effect in the production method comprising the cobalt adhesion step and the heat treatment step using agglomerated particles in Table 3.

The disclosures of Japanese Patent Application No. 2020-010848 (Filing Date: January 27, 2020) is hereby incorporated by reference in its entirety. All the documents, patent applications, and technical standards described in this description are hereby incorporated by reference to the same extent as if each of the documents, patent applications, and technical standards is specifically and individually described as being incorporated by reference.

## Claims

1. A method for producing a positive electrode active material for a non-aqueous electrolyte secondary battery, comprising:
providing a lithium transition metal composite oxide having a ratio D₅₀/D_{SEM} of 1 or more and 4 or less, wherein D₅₀ is a 50 % particle diameter in a volume-based cumulative particle size distribution and D_{SEM} is an average particle diameter based on electron microscope observation, having a layered structure, and having a ratio of a number of moles of nickel to a total number of moles of metals other than lithium of 0.3 or more and less than 1, and a ratio of a number of moles of cobalt to the total number of moles of metals other than lithium of 0 or more and less than 0.5;
bringing the lithium transition metal composite oxide into contact with a cobalt compound to obtain an adhered material; and
performing a heat-treatment of the adhered material at a temperature higher than 700 °C and lower than 1100 °C to obtain a heat-treated product.

2. The method according to claim 1, wherein the temperature of the heat-treatment is 800 °C or higher and 1000 °C or lower.

3. The method according to claim 1 or 2, wherein a total amount of the cobalt compound brought into contact with the lithium transition metal composite oxide is 1 mol% or greater and 20 mol% or less based on cobalt relative to the lithium transition metal composite oxide.

4. The method according to any one of claims 1 to 3, wherein the heat-treatment of the adhered material comprises mixing a lithium compound with the adhered material to obtain a mixture and heat-treating the mixture.

5. The method according to any one of claims 1 to 4, wherein the provided lithium transition metal composite oxide has a composition represented by the following formula:
LiₚNiₓCo_{y}M¹_{z}M²_{w}O₂
wherein 0.95≤p≤1.5, 0.3≤x<1, 0≤y<0.5, 0≤z<0.5, 0≤w<0.1, and x+y+z+w≤1, M¹ is at least one selected from the group consisting of Al and Mn, and M² is at least one selected from the group consisting of B, Na, Mg, Si, P, S, K, Ca, Ti, V, Cr, Zn, Sr, Y, Zr, Nb, Mo, In, Sn, Ba, La, Ce, Nd, Sm, Eu, Gd, Ta, W, and Bi.

6. A positive electrode active material for a non-aqueous electrolyte secondary battery, comprising:
a lithium transition metal composite oxide having a ratio D₅₀/D_{SEM} of 1 or more and 4 or less, wherein D₅₀ is a 50 % particle diameter in a volume-based cumulative particle size distribution and D_{SEM} is an average particle diameter based on electron microscope observation, the lithium transition metal composite oxide having a layered structure and having a composition in which a ratio of a number of moles of nickel to a total number of moles of metals other than lithium is 0.3 or more and less than 1, and a ratio of a number of moles of cobalt to the total number of moles of metals other than lithium is 0.01 or more and less than 0.5, wherein
in the lithium transition metal composite oxide, a ratio of the number of moles of nickel to the total number of moles of metals other than lithium is 0.2 or more in a first region at a depth of 500 nm from a surface of the lithium transition metal composite oxide and is 0.06 or more in a second region at a depth of 10 nm or less from the particle surface, and wherein
the ratio of the number of moles of cobalt to the total number of moles of metals other than lithium is larger in the second region than in the first region.

7. The positive electrode active material for a non-aqueous electrolyte secondary battery according to claim 6, wherein an absolute value of a value obtained by dividing a difference in the ratio of the number of moles of cobalt to the total number of moles of metals other than lithium in the first region and the second region by a difference in the depth of the first region from the surface and the depth of the second region from the surface is greater than 0.00004 (nm⁻¹) and less than 0.00122 (nm⁻¹).

8. The positive electrode active material for a non-aqueous electrolyte secondary battery according to claim 6 or 7, wherein the lithium transition metal composite oxide has a composition represented by the following formula:
Li_{q}NiᵣCoₛM¹ₜM²ᵤO₂
wherein 0.95≤q≤1.5, 0.3≤r<1, 0.01≤s<0.5, 0≤t<0.5, 0≤u≤0.1, and r+s+t+u≤1, M¹ is at least one selected from the group consisting of Al and Mn, and M² is at least one selected from the group consisting of B, Na, Mg, Si, P, S, K, Ca, Ti, V, Cr, Zn, Sr, Y, Zr, Nb, Mo, In, Sn, Ba, La, Ce, Nd, Sm, Eu, Gd, Ta, W, and Bi.
